(19) Europäisches Patentamt
European Patent Office
Office européen des brevets

(11) **EP 4 779 927 A1**

(12) **EUROPEAN PATENT APPLICATION**
published in accordance with Art. 153(4) EPC

(43) Date of publication:
**22.07.2026 Bulletin 2026/30**

(21) Application number: **23955173.2**

(22) Date of filing: **12.10.2023**

(51) International Patent Classification (IPC):
*H04L 9/32* (2006.01)

(52) Cooperative Patent Classification (CPC):
**H04L 9/32**

(86) International application number:
**PCT/CN2023/124373**

(87) International publication number:
**WO 2025/076793 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD. Shenzhen 518129 (CN)**

(72) Inventors:
• **LIU, Peng**
  **Shenzhen, Guangdong 518129 (CN)**

• **CHEN, Lei**
  **Shenzhen, Guangdong 518129 (CN)**
• **LIU, Qi**
  **Shenzhen, Guangdong 518129 (CN)**
• **ZHOU, Qing**
  **Shenzhen, Guangdong 518129 (CN)**
• **SUN, Li**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **SECURE COMMUNICATION METHOD AND APPARATUS**

(57) This application relates to the field of communication technologies, and in particular, to a secure communication method and an apparatus, to support message encryption and decryption in a non-key agreement mode, and improve security of message transmission. The method includes: separately performing security processing on q first message groups based on a first random seed, to obtain q second message groups, where q is an integer greater than 1; sending a second message to a second communication apparatus, where the second message includes the q second message groups; and after receiving feedback information from the second communication apparatus, updating the first random seed to a second random seed, where the feedback information indicates that the second communication apparatus correctly receives the second message, and the second random seed is determined based on the second message.

FIG. 3

**Description**

<u>TECHNICAL FIELD</u>

This application relates to the field of communication technologies, and in particular, to a secure communication method and an apparatus.

<u>BACKGROUND</u>

Secure transmission is fundamental to communication. Currently, most secure transmission schemes are key-based. For example, secure transmission schemes include symmetric encryption and asymmetric encryption. In a symmetric encryption scheme, two communication parties share a key, and encrypt and decrypt a message via the shared key. In an asymmetric encryption scheme, one communication party sends a public key to the other communication party, a transmitting end encrypts a to-be-sent message via the public key, and a receiving end decrypts the received message via a private key corresponding to the public key. Regardless of which encryption scheme is used, both communication parties need to perform key maintenance and management. The key maintenance and management need support of complex protocols, and vulnerabilities in the protocols can often be exploited by a non-target receiver, resulting in reduced security of message transmission.

In addition, some messages are transmitted before key agreement, and a key-based secure transmission scheme cannot be applied to these messages, resulting in reduced transmission security of these messages.

<u>SUMMARY</u>

This application provides a secure communication method and an apparatus, to support message encryption and decryption in a non-key agreement mode, and improve security of message transmission.

According to a first aspect, an embodiment of this application provides a secure communication method, where the method may be performed by a first communication apparatus. The method includes: separately performing security processing on q first message groups based on a first random seed, to obtain q second message groups, where q is an integer greater than 1; sending a second message to a second communication apparatus, where the second message includes the q second message groups; and after receiving feedback information from the second communication apparatus, updating the first random seed to a second random seed, where the feedback information indicates that the second communication apparatus correctly receives the second message, and the second random seed is determined based on the second message.

In the foregoing secure communication method, the first communication apparatus and the second communication apparatus are different communication apparatuses. The first communication apparatus (or the second communication apparatus) may be a terminal device, a component (for example, a processor, a chip, or a chip system) of the terminal device, or an apparatus used in conjunction with the terminal device, or may be a network device, a component (for example, a processor, a chip, or a chip system) of the network device, or an apparatus used in conjunction with the network device.

According to the foregoing method, security processing can be performed on a message (for example, a physical layer message) via a random seed in a non-key agreement mode; and when the second communication apparatus correctly receives a second message on which security processing is performed, a random seed being used is updated based on the second message. Security of message transmission is further improved by continuously changing the random seed being used. In addition, a to-be-transmitted message may be divided into a plurality of the first message groups to separately perform security processing, so that concurrent security processing is performed, and processing efficiency is further improved.

In a possible design, sending the second message to the second communication apparatus includes: sending a first frame to the second communication apparatus, where the first frame includes N subframes, the N subframes correspond to N random seeds, the N subframes include a first subframe that carries the second message, N is an integer greater than or equal to 2, and the N random seeds include the first random seed.

It may be understood that in this embodiment of this application, a frame may alternatively be replaced with a time-domain unit, and a subframe may be replaced with a time-domain subunit. For example, the time-domain unit may be a frame, and the time-domain subunit may be a subframe; or the time-domain unit is a set of frames, and the time-domain subunit is a frame; or the time-domain unit is 10 ms, and the time-domain subunit is 1 ms.

According to the foregoing design, each subframe can use an independent random seed, which helps improve the security of the message transmission and facilitates concurrent security processing on a message carried in each subframe.

In a possible design, the second random seed is determined based on the first random seed and the second message.

According to the foregoing design, the first random seed can be further introduced based on the second message, to determine the second random seed, and update the random seed. This helps increase difficulty in cracking the random seed and improve security.

In a possible design, the second random seed is determined based on a third random seed and the second message, the third random seed is a random seed corresponding to a second subframe, and the second subframe is a subframe of the first frame other than the first subframe.

According to the foregoing design, a random seed corresponding to the first subframe can be updated based on a random seed corresponding to another subframe of a frame in which the first subframe is located. This helps increase the difficulty in cracking the random seed and improve the security.

In a possible design, sending the first frame to the second communication apparatus includes: sending H frames to the second communication apparatus, where the H frames include the first frame, and H is an integer greater than or equal to 2, where the second random seed is determined based on a fourth random seed and the second message, the fourth random seed is a random seed corresponding to a third subframe, the third subframe is a subframe of a second frame, and the second frame is a frame among the H frames other than the first frame.

In an example, the second frame may be a previous frame in the first frame, and the third subframe is a last subframe of the second frame.

According to the foregoing design, the random seed corresponding to the first subframe of the first frame can be updated based on a random seed corresponding to a subframe of another frame. This helps increase the difficulty in cracking the random seed and improve the security.

In a possible design, the method further includes: sending first indication information to the second communication apparatus, where the first indication information indicates whether the first random seed is updated relative to a previous round of transmission.

According to the foregoing design, understanding of random seeds by the first communication apparatus and the second communication apparatus can be aligned, thereby synchronizing the random seeds of the first communication apparatus and the second communication apparatus.

In a possible design, the method further includes: separately performing security processing on p third message groups based on the second random seed, to obtain p fourth message groups, where p is an integer greater than 1; and sending fourth message and third indication information to the second communication apparatus, where the fourth message is determined based on the p fourth message groups, and the third indication information indicates whether the second random seed is updated relative to the first random seed.

According to the foregoing design, the understanding of the random seeds by the first communication apparatus and the second communication apparatus can be aligned, thereby synchronizing the random seeds of the first communication apparatus and the second communication apparatus.

In a possible design, separately performing security processing on the q first message groups based on the first random seed, to obtain the q second message groups includes: separately encrypting the q first message groups based on the first random seed, to obtain the q second message groups.

According to the foregoing design, a random seed is used as an encryption key, and an encryption module of an existing communication apparatus can be reused to implement security processing.

In a possible design, separately performing security processing on the q first message groups based on the first random seed, to obtain the q second message groups includes: for each first message group of the q first message groups, performing an exclusive OR operation on the first message group and the first random seed, to obtain a first intermediate value S1; dividing the first intermediate value S1 into a first segment $s^l$ and a second segment $s^r$, where lengths of the first segment $s^l$ and the second segment $s^r$ are b/2; determining a third segment $t^l$ based on the first segment $s^l$ and the second segment $s^r$, $t^r$ based on the second segment $s^r$ and the third segment $t^l$; and concatenating the third segment $t^l$ and the fourth segment $t^r$,

For example, determining the third segment $t^l$ based on the first segment $s^l$ and the second segment $s^r$, and determining the fourth segment $t^r$ based on the second segment $s^r$ and the third segment $t^l$ include: determining the third segment $t^l$ and the fourth segment $t^r$ according to $t^l = s^l \oplus \mathrm{OWF}(s^r, b/2)$ and $t^r = s^r \oplus \mathrm{OWF}(t^l, b/2)$, where $\oplus$ represents the exclusive OR operation, and OWF represents a one-way function.

According to the foregoing design, security processing can be performed on the message via the random seed, thereby improving the security.

In a possible design, before separately performing security processing on the q first message groups based on the first random seed, the method further includes: dividing a first message into the q first message groups based on a message group length b.

According to the foregoing design, the first message is divided into the q first message groups based on the message group length b, to enable the first communication apparatus at a transmitting end and the second communication apparatus at a receiving end to determine a length of each message group, and perform security processing or security inverse processing. In addition, lengths of all message groups are consistent, and the message groups can be processed by using one set of processing logic, which also helps reduce complexity of message group processing performed by the first communication apparatus at the transmitting end and the second communication apparatus at the receiving end.

According to a second aspect, an embodiment of this application provides a secure communication method, where the method may be performed by a second communication apparatus. The method includes: receiving a second message from a first communication apparatus, where the second message includes q second message groups, and q is an integer greater than 1; separately performing security inverse processing on the q second message groups based on a first random seed, to obtain q first message groups; and after correctly receiving the second message, updating the first random seed to a second random seed, where the second random seed is determined based on the second message.

In the foregoing secure communication method, the first communication apparatus and the second communication apparatus are different communication apparatuses. The second communication apparatus (or the first communication apparatus) may be a terminal device, a component (for example, a processor, a chip, or a chip system) of the terminal device, or an apparatus used in conjunction with the terminal device, or may be a network device, a component (for example, a processor, a chip, or a chip system) of the network device, or an apparatus used in conjunction with the network device.

In a possible design, the method further includes: sending feedback information to the first communication apparatus, where the feedback information indicates that the second message is correctly received.

In a possible design, receiving the second message from the first communication apparatus includes: receiving a first frame from the first communication apparatus, where the first frame includes N subframes, the N subframes correspond to N random seeds, the N subframes include a first subframe that carries the second message, N is an integer greater than or equal to 2, and the N random seeds include the first random seed.

In a possible design, the second random seed is determined based on the first random seed and the second message.

In a possible design, the second random seed is determined based on a third random seed and the second message, the third random seed is a random seed corresponding to a second subframe, and the second subframe is a subframe of the first frame other than the first subframe.

In a possible design, receiving the first frame from the first communication apparatus includes: receiving H frames from the first communication apparatus, where the H frames include the first frame, and H is an integer greater than or equal to 2, where the second random seed is determined based on a fourth random seed and the second message, the fourth random seed is a random seed corresponding to a third subframe, the third subframe is a subframe of a second frame, and the second frame is a frame among the H frames other than the first frame.

In a possible design, the second frame is a previous frame in the first frame, and the third subframe is a last subframe of the second frame.

In a possible design, the method further includes: receiving first indication information from the first communication apparatus, where the first indication information indicates whether the first random seed is updated relative to a previous round of transmission.

In a possible design, the first frame further includes second indication information, and the second indication information indicates whether the N random seeds corresponding to the N subframes are updated relative to a previous round of transmission.

In a possible design, the method further includes: receiving a fourth message and third indication information from the first communication apparatus, where the fourth message includes p fourth message groups, p is an integer greater than 1, and the third indication information indicates whether the second random seed is updated relative to the first random seed; and when the third indication information indicates that the second random seed is updated relative to the first random seed, separately performing security inverse processing on the p fourth message groups based on the second random seed, to obtain p third message groups.

In a possible design, separately performing security inverse processing on the q second message groups based on the first random seed, to obtain the q first message groups includes: separately decrypting the q second message groups based on the first random seed, to obtain the q first message groups.

In a possible design, separately performing security inverse processing on the q second message groups based on the first random seed, to obtain the q first message groups includes: for each second message group of the q second message groups, dividing the second message group into a fifth segment $c^l$ and a sixth segment $c^r$, $c^l$ and the sixth segment $c^r$ are b/2; determining an eighth segment $u^r$ based on the fifth segment $c^l$ and the sixth segment $c^r$, $u^l$ based on the fifth segment $c^l$ and the eighth segment $u^r$; concatenating the seventh segment $u^l$ and the eighth segment $u^r$, obtain a second intermediate value S2; and performing an exclusive OR operation on the second intermediate value S2 and the first random seed, to obtain the first message groups.

For example, determining the eighth segment $u^r$ based on the fifth segment $c^l$ and the sixth segment $c^r$, $u^l$ based on the fifth segment $c^l$ and the eighth segment $u^r$ include: determining the seventh segment $u^l$ and the eighth segment $u^r$ according to $u^r = c^r \oplus OWF(c^l,b/2)$ and $u^l = c^l \oplus OWF(u^r,b/2)$, where $\oplus$ represents the exclusive OR operation, and OWF represents a one-way function.

In a possible design, before separately performing security inverse processing on the q second message groups based on the first random seed, the method further includes: dividing the second message into the q second message groups based on a message group length b.

According to a third aspect, an embodiment of this application provides a communication apparatus. The apparatus has a function of implementing the method according to the foregoing first aspect or the foregoing second aspect. The function may be implemented by hardware, or may be implemented by hardware executing corresponding software. The hardware or the software includes one or more modules corresponding to the foregoing function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method according to the first aspect or the second aspect.

According to a fourth aspect, an embodiment of this application provides a communication apparatus. The communication apparatus includes an interface circuit and a processor, and the processor and the interface circuit are coupled to each other. The processor is configured to implement the method according to the foregoing first aspect or the foregoing second aspect by using a logic circuit or executing instructions. The interface circuit is configured to receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver apparatus, or an input/output interface.

Optionally, the communication apparatus may further include a memory, configured to store instructions executed by the processor, store input data required by the processor to run the instructions, or store data generated after the processor runs the instructions. The memory may be a physically independent unit, or may be coupled to the processor, or the processor includes the memory (that is, the processor and the memory are integrated).

In a possible implementation, the communication apparatus is a chip.

According to a fifth aspect, an embodiment of this application provides a communication system. The communication system includes a first communication apparatus and a second communication apparatus, the first communication apparatus is configured to implement the method in the foregoing first aspect, and the second communication apparatus is configured to implement the method in the foregoing second aspect.

According to a sixth aspect, an embodiment of this application provides a computer-readable storage medium. The computer-readable storage medium stores a computer program or instructions. When the computer program or the instructions are executed by a processor, the method according to the foregoing first aspect or the foregoing second aspect may be implemented.

According to a seventh aspect, an embodiment of this application further provides a computer program product, which includes a computer program or instructions. When the computer program or the instructions are executed by a processor, the method according to the foregoing first aspect or the foregoing second aspect may be implemented.

According to an eighth aspect, an embodiment of this application further provides a chip system. The chip system includes a processor. The processor is configured to be coupled to a memory. The memory is configured to store a program or instructions. When the program or the instructions are executed by the processor, the method according to the foregoing first aspect or the foregoing second aspect may be implemented.

For technical effects that can be achieved in the foregoing second aspect to the foregoing eighth aspect, refer to the technical effects that can be achieved in the first aspect. Details are not described herein again.

BRIEF DESCRIPTION OF DRAWINGS

FIG. 1 is a diagram of an architecture of a communication system according to an embodiment of this application;
FIG. 2 is a diagram of physical layer secure transmission according to an embodiment of this application;
FIG. 3 is a diagram of a secure communication method according to an embodiment of this application;
FIG. 4 is a diagram 1 of a security processing process according to an embodiment of this application;
FIG. 5 is a diagram 2 of a security processing process according to an embodiment of this application;
FIG. 6 is a diagram 1 of a security inverse processing process according to an embodiment of this application;
FIG. 7 is a diagram 2 of a security inverse processing process according to an embodiment of this application;
FIG. 8 is a diagram of a structure of message groups, subframes, and a frame according to an embodiment of this application;
FIG. 9 is a diagram 1 of a structure of frames according to an embodiment of this application;
FIG. 10 is a diagram 2 of a structure of frames according to an embodiment of this application;
FIG. 11 is a diagram 1 of a structure of a communication apparatus according to an embodiment of this application; and
FIG. 12 is a diagram 2 of a structure of a communication apparatus according to an embodiment of this application.

DESCRIPTION OF EMBODIMENTS

The technical solutions in embodiments of this application may be applied to various communication systems, for example, a long term evolution (long term evolution, LTE) system, an evolved LTE (LTE-advanced, LTE-A) system, a universal mobile telecommunications system (universal mobile telecommunications system,

UMTS), a 5th generation (5th generation, 5G) mobile communication system, a beyond 5G (beyond 5G, B5G) mobile communication system, or a communication system evolved after 5G, for example, a 6th generation (6th generation, 6G). The communication system may alternatively be a device-to-device (device-to-device, D2D) network, a Wi-Fi network, a machine to machine (machine to machine, M2M) network, an internet of things (internet of things, IoT) network, or another network.

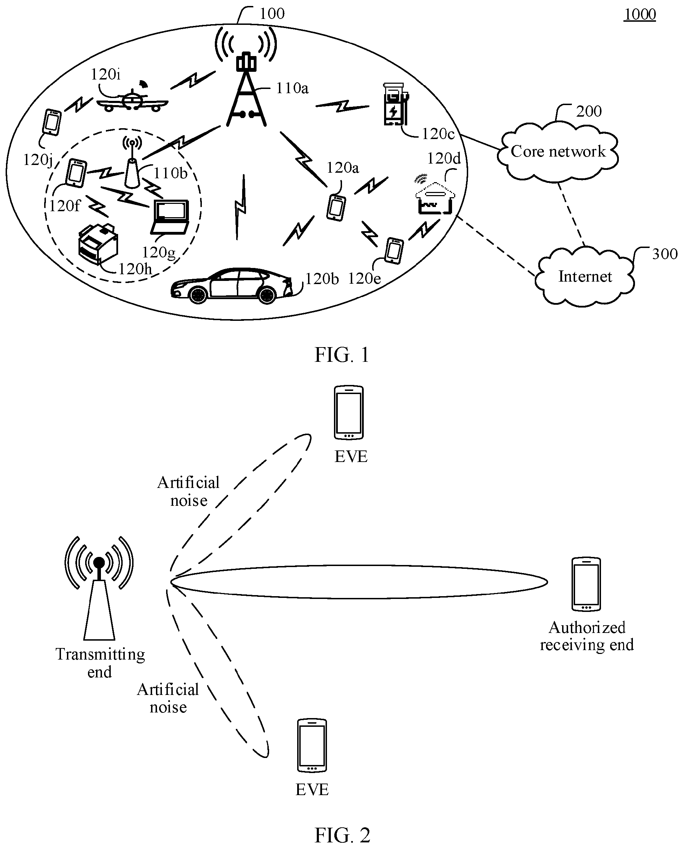

An architecture of a communication system to which embodiments of this application are applied may be shown in FIG. 1. A communication system 1000 includes a radio access network (radio access network, RAN) 100 and a core network (core network, CN) 200. Optionally, the communication system 1000 may further include an internet 300. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G system, a 5G system, or a system evolved after 5G (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates two or more of the foregoing systems.

An apparatus provided in embodiments of this application may be used in the network device 110 or the terminal device 120. It may be understood that FIG. 1 shows only a possible architecture of the communication system to which embodiments of this application may be applied. In another possible scenario, the architecture of the communication system may alternatively include another device.

The network device 110 is a node in a radio access network (radio access network, RAN), and may also be referred to as an access network device or a RAN node (or device). The network device 110 is configured to help the terminal device implement wireless access. A plurality of network devices 110 in the communication system 1000 may be nodes of a same type, or may be nodes of different types. In some scenarios, roles of the network device 110 and the terminal device 120 are relative. For example, a network element 120i in FIG. 1 may be a helicopter or an uncrewed aerial vehicle, and may be configured as a mobile base station. For terminal devices 120j that access the RAN 100 via the network element 120i, the network element 120i is a base station. However, for a base station 110a, the network element 120i is a terminal device. Sometimes, the network device 110 and the terminal device 120 are both referred to as communication apparatuses. For example, network elements 110a and 110b in FIG. 1 may be understood as communication apparatuses having a base station function, and network elements 120a to 120j may be understood as communication apparatuses having a terminal device function.

In a possible scenario, the network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6G mobile communication system, a base station in a future mobile communication system, a satellite, an access point (access point, AP) in a Wi-Fi system, an integrated access and backhaul (integrated access and backhaul, IAB) node, a network device that is in a non-terrestrial network (non-terrestrial network, NTN) communication system of a mobile switching center and that may be deployed on a high-altitude platform or a satellite, or the like. The network device may be a macro base station (for example, 110a in FIG. 1), a micro base station or an indoor station (for example, 110b in FIG. 1), a relay node or a donor node, or a radio controller in a CRAN scenario. The network device may alternatively be a device having a base station function in device to device (device to device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal device in implementing wireless access, and different network devices separately implement a part of functions of the base station. For example, the network device may be a central unit (central unit, CU), a distributed unit (distributed unit, DU), a CU-control plane (control plane, CP), a CU-user plane (user plane, UP), or a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

A form of the network device is not limited in embodiments of this application. An apparatus configured to implement a function of the network device may be a network device, or may be an apparatus, for example, a chip system, that supports the network device in implementing the function. The apparatus may be mounted in the network device or used in conjunction with the network device.

The terminal device 120 may also be referred to as a terminal, user equipment (user equipment, UE), a mobile station (mobile station, MS), a mobile terminal (mobile terminal, MT), or the like, or is a device that is configured to provide a user with voice and/or data connectivity, or may be an internet of things device, or is a station (station, STA) in a Wi-Fi system. For example, the terminal device includes a hand-held device, a vehicle-mounted device, or the like that has a wireless connection function. Currently, the terminal device may be: a mobile phone, a tablet computer, a notebook computer, a palmtop computer, a mobile internet device (mobile internet device, MID), a wearable device (for example, a smartwatch, a smart band, a pedometer, or smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal device is not limited in embodiments of this application. An apparatus configured to implement a function of the terminal device may be a terminal device, or may be an apparatus, for example, a chip system, that supports the terminal device in implementing the function. The apparatus may be mounted in a terminal device or used in conjunction with the terminal device. In embodiments of this application, the chip system may include a chip, or may include a chip and another discrete component.

For ease of understanding by a person skilled in the art, the following explains and describes some terms in this application.

1. Random seed: may also be referred to as a random bit, a random bit stream, a random entropy, status information, or the like, and may be used to perform security processing on a message, for example, used to perform encryption or integrity protection on the message. Optionally, the random seed may be directly used to perform security processing on the message, or may be used to generate a key by using an algorithm, where the key is used to perform security processing on the message.

2. Message group: may also be referred to as a data block or a code block, and is a part of a message. One message may include one or more message groups. When the message includes one message group, the message group may also be referred to as a message. The message group may include, for example, a source message group and an encoded code block group.

3. Physical layer secure transmission: A physical layer message is generally transmitted before key agreement. The physical layer secure transmission is a keyless secure transmission solution, which obtains a channel advantage at a physical layer through signal processing, that is, quality of a valid channel is better than that of an invalid channel, and then implements, by using a physical layer technology (such as channel encoding and artificial noise), secret communication between authorized parties without key sharing.

Refer to a diagram of physical layer secure transmission shown in FIG. 2, a transmitting end (Alice), an authorized receiving end (Bob), and an eavesdropper (eavesdropper, EVE) are included. The transmitting end may inject artificial noise into a null space of a valid channel (a channel between the transmitting end and the authorized receiving end) through encoding, and increase noise in a signal received by the eavesdropper, to increase a bit error rate of the eavesdropper, so as to ensure security of signal transmission between the transmitting end and the authorized receiving end.

However, for a physical layer message or the like that is transmitted without key agreement, message content is easy to be cracked by an attacker through noise reduction processing, reception from a same direction as an authorized receiving end, or the like, and security of message transmission is low. Therefore, how to improve security of the physical layer message or the like that is transmitted without the key agreement is an issue to be addressed.

Based on this, this application provides a secure communication method and an apparatus, to support message encryption and decryption in a non-key agreement mode, and improve security of message transmission. The following describes in detail embodiments of this application with reference to accompanying drawings.

In addition, it should be understood that ordinal numbers such as "first" and "second" mentioned in embodiments of this application are used to distinguish between a plurality of objects, and are not intended to limit a size, content, a sequence, a time sequence, priorities, importance degrees, or the like of the plurality of objects. For example, a first message and a second message do not indicate different priorities, importance degrees, or the like corresponding to the two messages.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally represents an "or" relationship between the associated objects. For example, A/B indicates A or B. "At least one of the following items (pieces)" or a similar expression thereof refers to any combination of these items, including a singular item (piece) or any combination of plural items (pieces). For example, at least one of a, b, or c represents: a, b, c, a and b, a and c, b and c, or a, b, and c, where a, b, and c may be singular or plural.

The secure communication method provided in embodiments of this application is performed by a first communication apparatus and a second communication apparatus. The first communication apparatus and the second communication apparatus are different communication apparatuses. The first communication apparatus (or the second communication apparatus) may be a terminal device, a component (for example, a processor, a chip, or a chip system) of the terminal device, or an apparatus used in conjunction with the terminal device, or may be a network device, a component (for example, a processor, a chip, or a chip system) of the network device, or an apparatus used in conjunction with the network device.

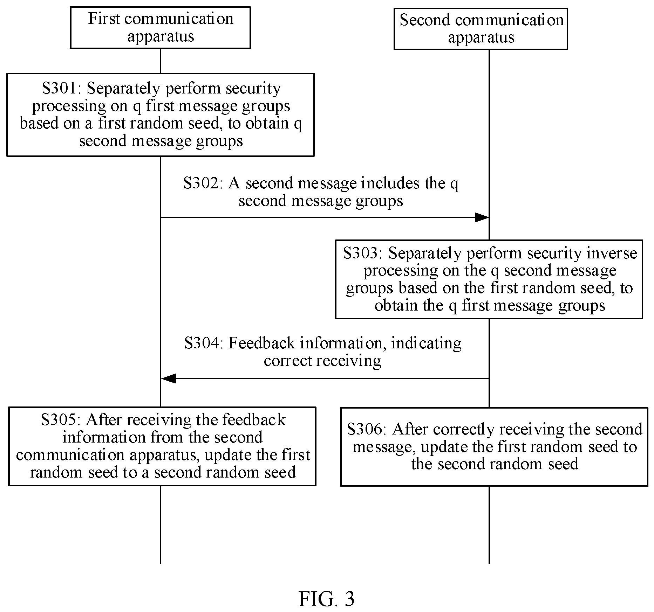

FIG. 3 is a diagram of a secure communication method according to an embodiment of this application. The method includes the following steps.

S301: A first communication apparatus separately performs security processing on q first message groups based on a first random seed, to obtain q second message groups, where q is an integer greater than 1.

In this embodiment of this application, the first communication apparatus may determine the first random seed based on a message that is sent by the first communication apparatus to the second communication apparatus and that is correctly received by the second communication apparatus, or may determine the first random seed based on a message that is sent by the second communication apparatus to the first communication apparatus and that is received by the first communication apparatus. Security processing may be performed or may not be performed on the message sent by the first communication apparatus or the second communication apparatus.

In an example, the first communication apparatus already sends a message A on which security processing is performed to the second communication apparatus, and the message A is correctly received by the second communication apparatus. The first communication apparatus may use the message A as an input of a message digest algorithm, a hash algorithm, or the like, and use a part of or all content of an output of the message digest algorithm, the hash algorithm, or the like as the first random seed.

The first communication apparatus may further determine the first random seed based on a random seed defined in a protocol, a random seed used for previous message transmission between the first communication apparatus and the second communication apparatus, a random seed negotiated or agreed on by the first communication apparatus and the second communication apparatus, or the like.

In an example, if no message on which security processing is performed is transmitted between the first communication apparatus and the second communication apparatus, or a transmitted message on which security processing is performed is not correctly received by a receiving end, the first communication apparatus may determine the random seed defined in the protocol as the first random seed.

In addition, it may be understood that the second communication apparatus may determine the first random seed in a manner that is the same as or similar to that of the first communication apparatus. Details are not described again.

For a to-be-sent (or to-be-transmitted) first message, the first communication apparatus may divide the first message into q first message groups, and security processing may be separately performed on each first message group based on the first random seed.

In a possible implementation, the first communication apparatus may divide the first message into the q first message groups based on the message group length b.

In an example, a first message M is a binary sequence whose length is $l$, that is, $M \in \{0,1\}^l$. The first communication apparatus may divide the first message M based on the message group length b, to obtain $q = \lceil l/b \rceil$ message groups, which are denoted as $m_1$, $m_2$, ..., and $m_q$. If the actual length $b_q$ of a last message group $m_q$ is less than the message group length b, that is, $b_q < b$, processing may be performed based on $b_q$, or a zero padding operation may be performed (for example, zero padding is performed after the last message group $m_q$), so that $b_q = b$, where $\lceil \ \rceil$ represents rounding up.

Alternatively, the first communication apparatus may divide the first message M based on the message group length b, to obtain $q = \lfloor l/b \rfloor + 1$ message groups, which are denoted as $m_1$, $m_2$, ..., $m_q$. If the actual length $b_q$ of the last message group $m_q$ is less than the message group length b, that is, $b_q < b$, processing may be performed based on $b_q$, or the zero padding operation may be performed (for example, the zero padding is performed after the last message group $m_q$), so that $b_q = b$, where $\lfloor \ \rfloor$ represents rounding down.

The message group length b may be preconfigured or predefined by using a protocol or the like, or may be determined by the first communication apparatus and the second communication apparatus through negotiation. For example, after a connection is established between the first communication apparatus and the second communication apparatus, the first communication apparatus may indicate (or configure) the applied message group length b to the second communication apparatus, or the second communication apparatus may indicate (or configure) the applied message group length b to the first communication apparatus.

In a possible implementation, the first communication apparatus may use the first random seed as a key to separately encrypt the q first message groups, to obtain the q second message groups, so as to separately perform security processing on the q first message groups. When the first communication apparatus uses the first random seed as the key to separately encrypt the q first message group, an encryption/decryption algorithm, for example, an advanced encryption standard (advanced encryption standard, AES) or a data encryption standard (data encryption standard, DES), may be used. This is not limited in this application.

In another possible implementation, the first communication apparatus may further perform, for each first message group of the q first message groups, an exclusive OR operation on the first message group and the first random seed, to obtain a first intermediate value S1; divide the first intermediate value S1 into a first segment $s^l$ and a second segment $s^r$, where lengths of the first segment $s^l$ and the second segment $s^r$ are b/2; determine a third segment $t^l$ based on the first segment $s^l$ and the second segment $s^r$, and determine a fourth segment $t^r$ based on the second segment $s^r$ and the third segment $t^l$; and concatenate (or join sequentially) the third segment $t^l$ and the fourth segment $t^r$, perform security processing on the q first message groups.

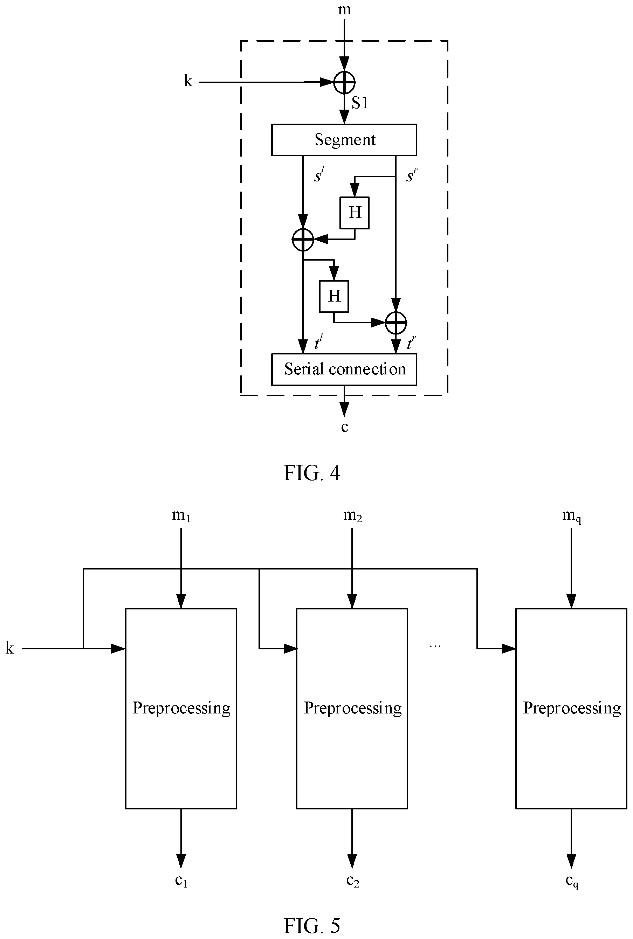

In an example, refer to a diagram of a security processing process shown in FIG. 4. In FIG. 4, m represents any first message group (that is, a bit string whose length is b), k represents a first random seed, and H represents a one-way operation. The first communication apparatus may perform the exclusive OR operation on the first message group m and the first random seed k, to obtain a first intermediate value S1; and divide the first intermediate value S1 into a first segment $s^l$ and a second segment $s^r$, where lengths of the first segment $s^l$ and the second segment $s^r$ are b/2, and S1= $s^l \| s^r$, $s^l$ and the second segment $s^r$ are concatenated (or connected in series) to obtain the first intermediate value S1. $t^l = s^l \oplus OWF(s^r, b/2)$ and $t^r = s^r \oplus OWF(t^l, b/2)$ are calculated, to determine a third segment $t^l$ and a fourth segment $t^r$, $t^l$ and the fourth segment $t^r$ are concatenated to obtain a second message group c, that is, c= $t^l \| t^r$. represents concatenation or serial connection; OWF represents a one-way function, and may be a SHAKE256 algorithm, or may be a hash (hash) algorithm, for example, a message digest (message digest, MD) 4 algorithm or a secure hash algorithm (secure hash algorithm, SHA)-1, or another algorithm or function of which an output is nearly evenly distributed; OWF($s^r$,b/2) represents performing a one-way operation on $s^r$ to obtain a bit string of a length b/2; and OWF($t^l$,b/2) represents performing a one-way operation on $t^l$ to obtain a bit string of a length b/2.

It may be understood that the first random seed k is a bit string whose length is not less than the message group length b. For example, k may be a bit string whose length is b. Separately performing security processing on the q first message groups based on the first random seed, to obtain the q second message groups may be implemented by a preprocessing module (or unit), a security processing module, or the like of the first communication apparatus. For example, the preprocessing module is used for implementation. Refer to a diagram of a security processing process shown in FIG. 5, by dividing a first message into q first message groups ($m_1$, $m_2$, ..., $m_q$), the preprocessing module can concurrently and separately perform security processing on the q first message groups based on a first random seed k, to obtain q second message groups ($c_1$, $c_2$, ..., $c_q$), and improve processing efficiency.

S302: The first communication apparatus sends a second message to the second communication apparatus, and correspondingly, the second communication apparatus receives the second message. The second message includes the q second message groups.

In a possible implementation, after obtaining the q second message groups, the first communication apparatus may reassemble (for example, concatenate or join sequentially) the q second message groups to obtain the second message, and send the second message to the second communication apparatus via a channel between the first communication apparatus and the second communication apparatus.

In an example, after separately performing security processing on the q first message groups ($m_1$, $m_2$, ..., $m_q$) based on the first random seed, to obtain the q second message groups ($c_1$, $c_2$, ..., $c_q$), the first communication apparatus may concatenate the q second message groups ($c_1$, $c_2$, ..., $c_q$), to obtain a second message C= $c_1||c_2||$, ... , $||c_q$, and send the second message C to the second communication apparatus via the channel between the first communication apparatus and the second communication apparatus.

S303: The second communication apparatus separately performs security inverse processing on the q second message groups based on the first random seed, to obtain the q first message groups.

After receiving the first message, the second communication apparatus may divide the second message into the q second message groups based on the message group length b. For an implementation of how the second communication apparatus determines the message group length b and divides the second message into the q second message groups based on the message group length b, refer to an implementation of how the first communication apparatus determines the message group length b and divides the first message into the q first message groups based on the message group length b. Details are not described again.

For the q second message groups, the second communication apparatus may perform security inverse processing corresponding to security processing of the first communication apparatus side, to obtain the original q first message groups. After obtaining the q first message groups, the second communication apparatus may reassemble (for example, concatenate or join sequentially) the q first message groups, to restore the original first message.

In a possible implementation, if the first communication apparatus uses the first random seed as a key to separately encrypt the q first message groups, to obtain the q second message groups, the second communication apparatus may also use the first random seed as the key to separately decrypt the q second message groups, to obtain the q first message groups, so as to separately perform security inverse processing on the q second message groups. An algorithm or a function used by the second communication apparatus for decryption may be consistent with or corresponding to an algorithm or a function used by the first communication apparatus for encryption.

In another possible implementation, for each second message group of the q second message groups, the second communication apparatus may alternatively divide the second message group into a fifth segment $c^l$ and a sixth segment $c^r$, $c^l$ and the sixth segment $c^r$ are b/2; determine an eighth segment $u^r$ based on the fifth segment $c^l$ and the sixth segment $c^r$, $u^l$ based on the eighth segment $u^r$; concatenate (or join sequentially) the seventh segment $u^l$ and the eighth segment $u^r$, obtain a second intermediate value S2; and perform the exclusive OR operation on the second intermediate value S2 and the first random seed, to obtain the first message groups, so as to separately perform security inverse processing on the q second message groups.

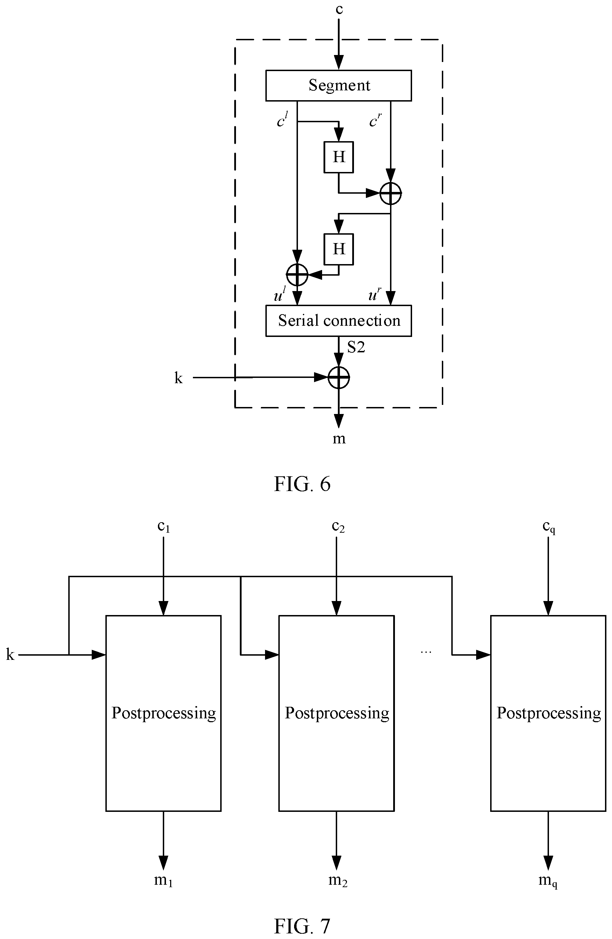

In an example, refer to a diagram of a security inverse processing process shown in FIG. 6. In FIG. 6, c represents any second message group, k represents a first random seed, and H represents a one-way operation. A second communication apparatus may divide the second message group c into a fifth segment $c^l$ and a sixth segment $c^r$, segment $c^l$ and the sixth segment $c^r$ are b/2, and c= $c^l||c^r$, $c^l$ and the sixth segment $c^r$ are concatenated (or connected in series) to obtain the second message group c. $u^r = c^r \oplus OWF(c^l,b/2)$ and $u^l = c^l \oplus OWF(u^r,b/2)$ are calculated, to determine a seventh segment $u^l$ and an eighth segment $u^r$; the seventh segment $u^l$ and the eighth segment $u^r$ are concatenated to obtain a second intermediate value S2, that is, S2= $u^l||u^r$; and an exclusive OR operation is performed on the second intermediate value S2 and the first random seed k to obtain a first message group m. $\oplus$ represents the exclusive OR operation, || represents concatenation or serial connection, and OWF represents a one-way function.

It may be understood that separately performing security inverse processing on the q second message groups based on the first random seed, to obtain the q first message groups may be implemented by a postprocessing module (or unit), a security processing module, or the like of the second communication apparatus. For example, the postprocessing module is used for implementation. Refer to a diagram of a security inverse processing process shown in FIG. 7, by dividing a second message into q second message groups ($c_1$, $c_2$, ..., $c_q$), the postprocessing module can concurrently and separately perform security inverse processing on the q second message groups based on a first random seed k, to obtain q first messages ($c_1$, $c_2$, ..., $c_q$), and improve processing efficiency.

S304: After correctly receiving the second message, the second communication apparatus sends feedback information to the first communication apparatus, and correspondingly, the first communication apparatus receives the feedback information. The feedback information indicates that the second communication apparatus correctly receives the second message.

In this embodiment of this application, the second communication apparatus may perform a validation check such as a cyclic redundancy check (cyclic redundancy check, CRC) on the second message. If the second message passes the check, the second communication apparatus may determine that the second message is correctly received. In this case, the second communication apparatus may send, to the first communication apparatus, the feedback information indicating that the second message is correctly received. For example, the feedback information is an acknowledgment (acknowledgment, ACK).

If the second message fails to pass the check, the second communication apparatus may determine that the second message is not correctly received. In this case, the second communication apparatus may send, to the first communication apparatus, feedback information indicating that the second message is not correctly received, or may not send feedback information to the first communication apparatus. For example, when the second communication apparatus determines that the second message is not correctly received, and the second communication apparatus sends, to the first communication apparatus, the feedback information indicating that the second message is not correctly received, the feedback information may be a negative acknowledgment (negative acknowledgment, NACK).

If the first communication apparatus receives, from the second communication apparatus, the feedback information indicating that the second message is not correctly received, or no feedback information is received from the second communication apparatus within specified feedback duration after the sending of the second message, the first communication apparatus may determine that the second communication apparatus does not correctly receive the second message. When the second communication apparatus does not correctly receive the second message, the first communication apparatus and the second communication apparatus may not update the first random seed, to avoid that an updated random seed determined by the first communication apparatus based on the sent second message is inconsistent with an updated random seed determined by the second communication apparatus based on a received second message.

S305: After receiving the feedback information from the second communication apparatus, the first communication apparatus updates the first random seed to a second random seed. The second random seed is determined based on the second message.

S306: After correctly receiving the second message, the second communication apparatus updates the first random seed to the second random seed. The second random seed is determined based on the second message.

It may be understood that after correctly receiving the second message, the second communication apparatus may first perform step S304 and then perform step S306, or may first perform step S306 and then perform step S304, or may simultaneously perform steps S304 and S306. A sequence of performing S304 and S306 by the second communication apparatus is not limited in this embodiment of this application.

In this way, the first communication apparatus and the second communication apparatus update the first random seed based on the second message only when the second communication apparatus correctly receives the second message. This helps ensure consistency of random seeds used by the first communication apparatus and the second communication apparatus. In addition, a random seed being used is updated based on a correctly transmitted message (for example, the second message), and security of message transmission is further improved by continuously changing the random seed being used.

In a possible implementation, the second random seed may be obtained based on the second message.

In an example, the second random seed may be determined according to k' = OWF(c,b), where c represents the second message, b represents a required random seed length, k' represents the second random seed, OWF represents a one-way function, and k' = OWF(c,b) represents that a one-way operation is performed on c, to obtain k' whose length is b.

In another possible implementation, the second random seed may alternatively be obtained based on the first random seed and the second message.

In an example, the second random seed may be determined according to t = OWF(k||c,b) and k' = OWF(t,b), where c represents the second message, k represents the first random seed, b represents the required random seed length, k' represents the second random seed, OWF represents the one-way function, and || represents concatenation or serial connection. In some implementations, k' may alternatively be directly equal to t.

According to the secure communication method provided in this embodiment of this application, security processing can be performed on the first message via a random seed in a non-key agreement mode; and when the second communication apparatus correctly receives the second message on which security processing is performed, a used random seed is updated based on the second message. In comparison with the solution shown in FIG. 2 in which security is improved by adding artificial noise, and an eavesdropper can decipher a message by performing processing such as noise reduction, in this embodiment of this application, security processing is performed on a message via continuously updating and changing random seeds, so that message encryption and decryption can be supported in the non-key agreement mode, costs and difficulty for the eavesdropper to decipher the message are increased, and the security of the message transmission is improved.

In a communication system, to improve transmission efficiency, a plurality of messages may be sent in an aggregation form. For example, one frame may be encapsulated by a plurality of aggregated subframes, and each subframe may carry a message. In addition, in this embodiment of this application, to improve security of message transmission and facilitate concurrent security processing or security inverse processing on the message carried in each subframe, an independent random seed may be used for each subframe.

In an example, a first frame sent by the first communication apparatus to the second communication apparatus may include N subframes, the N subframes correspond to N random seeds, the N subframes may include a first subframe that carries a second message, and the N random seeds may include a first random seed used to perform security processing on a first message.

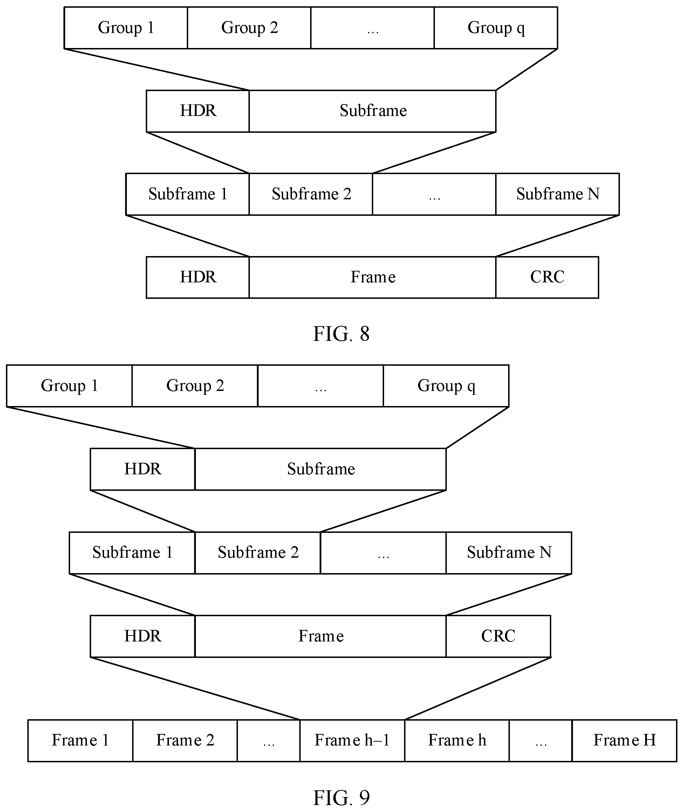

Refer to a diagram of a structure of message groups, subframes, and a frame shown in FIG. 8, the frame may include N subframes, and each subframe may use an independent random seed. In FIG. 8, random seeds respectively corresponding to a subframe 1, a subframe 2, ..., and a subframe N may be denoted as $k_1$, $k_2$, ..., $k_N$. Each subframe may include a plurality of processing groups (that is, a plurality of message groups). In FIG. 8, an example in which the subframe 2 corresponds to a group 1, a group 2, ..., and a group q is used. In addition, each subframe may further include a high-speed data transmission technology (high data rate, HDR) header part, and the frame may further include the HDR header part and a CRC part.

In a possible implementation, a second communication apparatus receives a frame (for example, a first frame) from a first communication apparatus. When the frame passes a CRC, it may be determined that all subframes in the frame are correctly received, that is, each subframe (or the message carried in each subframe) in the frame is correctly received, and feedback information indicating that all subframes in the frame are correctly received may be sent to the first communication apparatus. In addition, when all subframes in the frame are correctly received by the second communication apparatus, the first communication apparatus and the second communication apparatus may update all the N random seeds (for example, $k_1$, $k_2$, ..., $k_N$) corresponding to the N subframes in the frame; or when no subframes or not all subframes in the frame are correctly received by the second communication apparatus, the N random seeds corresponding to the N subframes in the frame may not be updated.

In an example, the random seeds may be updated according to $t_n' = OWF(k_n \| c_n, b)$ and $k_n' = OWF(t_n', b)$, where n=1, 2, ..., N, $c_n$ represents a message carried in a subframe n, $k_n$ represents a before-update random seed corresponding to the subframe n, b represents the required random seed length, $k_n'$ represents an updated random seed corresponding to the subframe n, OWF represents the one-way function, and $\|$ represents concatenation or serial connection.

In some implementations, $k_n'$ may be directly equal to $t_n'$, that is, $t_n'$ may be used as the updated random seed through calculation based on $k_n$ and $c_n$.

As an entire frame corresponds to one CRC, and when the CRC succeeds, all subframes in the frame are correctly received, a random seed corresponding to a subframe may be updated not only based on a message (that is, a ciphertext) carried in the subframe, but also based on a message carried in another subframe of the same frame.

For example, the foregoing $t_n' = OWF(k_n \| c_n, b)$ may be replaced with $t_n' = OWF(k_n \| f(c_1, ..., c_N), b)$, where $f(*)$ indicates processing performed on messages carried in the N subframes in the frame, for example, may be serial connection, linear superposition, or sampling (sampling), or may be permutation. For example, c2 is used to determine t1', and c3 is used to determine t2'. This is not specifically limited.

In some implementations, a random seed corresponding to a subframe may be updated not only based on the random seed corresponding to the subframe, but also based on a random seed corresponding to another subframe of the same frame.

For example, the first frame sent by the first communication apparatus to the first communication apparatus includes the N subframes, and the N subframes include a first subframe that carries the foregoing second message. When the first frame is correctly received by the second communication apparatus, the first communication apparatus and the second communication apparatus may determine a second random seed based on a third random seed and the second message, and update a first random seed corresponding to the first subframe, where the third random seed is a random seed corresponding to a second subframe, the second subframe may be any subframe of the first frame other than the first subframe. For example, the second subframe may be a subframe before the first subframe of the first frame, or a subframe after the first subframe of the first frame.

Similarly, in a communication system, to improve transmission efficiency, a plurality of frames may alternatively be sent in an aggregated manner. If subframes in the plurality of frames all use a same random seed, the subframes may be easily cracked by an unauthorized device. In this embodiment of this application, refer to a diagram of a structure of frames shown in FIG. 9, if H frames are sent in the aggregated manner, each subframe in the H frames may use an independent random seed, and N random seeds corresponding to N subframes in an $h^{th}$ frame may be denoted as: $k_{h, 1}$, $k_{h, 2}$, ..., $k_{h, N}$, where h=1, 2, ..., H.

In an example, when a first communication apparatus communicates with a second communication apparatus, H sets of random seeds may be maintained in the first communication apparatus and the second communication apparatus. H may be determined based on a maximum quantity of aggregated frames allowed between the first communication apparatus and the second communication apparatus. The H sets of random seeds are in one-to-one correspondence with the H frames. One set of random seeds corresponding to each frame may include N random seeds, which are in one-to-one correspondence with the N subframes of the frame. When the first communication apparatus sends a frame based on a set of random seeds, and the frame is successfully received by the second communication apparatus, the first communication apparatus and the second communication apparatus may update the set of random seeds.

For example, the first communication apparatus sends, to the second communication apparatus, a frame 1 and a frame 2 that are aggregated, and random seeds used in the frame 1 and the frame 2 are a first set of random seeds and a second set of random seeds in the H sets of random seeds. When the frame 1 and the frame 2 are successfully received by the second communication apparatus, the first communication apparatus and the second communication apparatus may update the first set of random seeds and the second set of random seeds in the H sets of random seeds.

It may be understood that in a scenario in which the plurality of frames are sent in the aggregated manner, random seed update may be performed at a granularity of the plurality of frames, or the random seed update may be performed at a granularity of a single frame. That the random seed update is performed at the granularity of the plurality of frames may refer to that when the plurality of frames sent in the aggregated manner are all successfully received by the second communication apparatus, the first communication apparatus and the second communication apparatus update a plurality of sets of random seeds corresponding to the plurality of frames; or when none of or not all of the plurality of frames sent in the aggregated manner are successfully received by the second communication apparatus, no random seed is updated. That the random seed update is performed at the granularity of the single frame may refer to that when a frame is successfully received by the second communication apparatus, the first communication apparatus and the second communication apparatus update one set of random seeds corresponding to the frame; or when a frame is not successfully received by the second communication apparatus, no random seed is updated.

In a possible implementation, when the random seed update is performed at the granularity of the plurality of frames, a random seed corresponding to a subframe of a frame may be updated not only based on the random seed corresponding to the subframe, but also based on a random seed corresponding to a subframe of another frame.

For example, the first communication apparatus sends the H frames to the second communication apparatus, where the H frames include a first frame, and N subframes included in the first frame include a first subframe that carries the foregoing second message. When the H frames are correctly received by the second communication apparatus, the first communication apparatus and the second communication apparatus may determine a second random seed based on a fourth random seed and the second message, and update a first random seed corresponding to the first subframe, where the fourth random seed may be a random seed corresponding to a third subframe, the third subframe may be a subframe of a second frame, and the second frame is a frame among the H frames other than the first frame. For example, the second frame may be a previous frame of the first frame, and the third subframe may be a last subframe of the second frame.

In an example, $t_{h,n}' = OWF(k_{h,0} \| c_{h,n}, b)$ and $k_{h,n}' = OWF(t_{h,n}', b)$, $k_{h,0} = k_{h-1,n}$, where n=1, 2, ..., N, $c_{h,n}$ represents a message carried by a subframe n of a frame h, $k_{h-1,n}$ represents a before-update random seed corresponding to the subframe n of the frame h, b represents the required random seed length, $k_{h,n}'$ represents an updated random seed corresponding to the subframe n of the frame h, OWF represents a one-way function, and $\|$ represents concatenation or serial connection. It should be understood that h herein represents a frame location index, that is, once the frame h (that is, an $h^{th}$ frame) needs to be updated, the updated random seed of the frame h is determined based on an original random seed (that is, the before-update random seed) of a frame h-1 (that is, an $(h-1)^{th}$ frame).

In some implementations, to align understanding of random seeds by the first communication apparatus and the second communication apparatus, and ensure synchronization of the random seeds of the first communication apparatus and the second communication apparatus, the first communication apparatus may further add indication information, to indicate whether a random seed being used is updated relative to a previous round of transmission.

In an example, the first communication apparatus may add the indication information to a subframe (for example, an HDR header of the subframe), to indicate whether a random seed corresponding to the subframe is updated relative to a previous round of transmission.

For example, when the second communication apparatus sends a first subframe that carries a first message, the first communication apparatus may add first indication information to the first subframe, to indicate whether a random seed (for example, a first random seed) corresponding to the subframe is updated relative to a previous round of transmission. The second communication apparatus may determine, based on the indication, whether to perform security inverse processing via a before-update random seed corresponding to the subframe, or perform security inverse processing via an updated random seed.

For another example, the first subframe is a $1^{st}$ subframe of a $3^{rd}$ frame in a round of transmission, and the $3^{rd}$ frame is correctly received by the second communication apparatus. The first communication apparatus updates a first random seed corresponding to the $1^{st}$ subframe of the $3^{rd}$ frame to a second random seed. In a next round of transmission, the $1^{st}$ subframe of the $3^{rd}$ frame carries a third message, the first communication apparatus may separately perform security processing on p third message groups of the third message based on the second random seed, to obtain p fourth message groups, and a fourth message including the p fourth message groups is carried in the 1st subframe of the 3rd frame; and third indication information may be added to the subframe, to indicate that the second random seed corresponding to the subframe is updated relative to the first random seed used in the previous round.

In another example, the first communication apparatus may further add the indication information to a frame (for example, an HDR header or a tail of the frame), to indicate whether a set of random seeds (for example, N random seeds corresponding to N subframes included in the frame) corresponding to the frame are updated relative to a previous round of transmission.

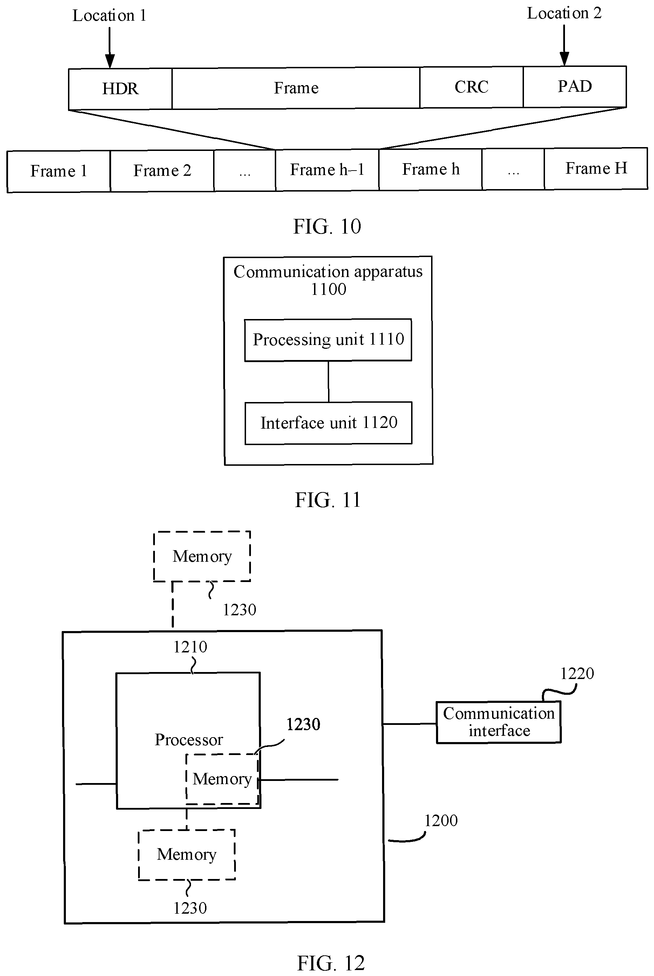

Refer to a diagram of a structure of frames shown in FIG. 10, indication information (for example, second indication information) may be added to a frame header, for example, an HDR header (location 1 in FIG. 10) of a frame, to indicate whether a set of random seeds corresponding to the frame are updated relative to a previous round of transmission. Alternatively, the indication information may be added to a tail of the frame, for example, before or after a CRC (an example in which a padding (PAD) field is added after the CRC to carry the indication information is used in location 2 in FIG. 10), to indicate whether a set of random seeds corresponding to the frame are updated relative to a previous round of transmission.

In some implementations, the indication information may also be added to a boundary part between frames, to indicate whether a random seed corresponding to a previous frame and/or a next frame neighboring to the indication information is updated relative to a previous round of transmission.

In some implementations, if H frames are sent in an aggregated manner, a bitmap (bitmap) may further be sent before an aggregated frame, to indicate whether random seeds corresponding to the H frames are updated relative to a previous round of transmission.

In addition, it may be understood that in this embodiment of this application, a frame may alternatively be replaced with a time-domain unit, and a subframe may be replaced with a time-domain subunit. For example, the time-domain unit may be a frame, and the time-domain subunit may be a subframe; or the time-domain unit is a set of frames, and the time-domain subunit is a frame; or the time-domain unit is 10 ms, and the time-domain subunit is 1 ms.

The following describes communication apparatuses provided in embodiments of this application. FIG. 11 is a diagram of a structure of a communication apparatus according to an embodiment of this application. The communication apparatus may include units or modules corresponding to all or a part of the steps in the foregoing method embodiments, and may be configured to perform the steps performed by the first communication apparatus or the second communication apparatus in the foregoing embodiments. For details, refer to related descriptions in the foregoing method embodiments.

As shown in FIG. 11, a communication apparatus 1100 includes a processing unit 1110 and an interface unit 1120. The processing unit 1110 may be a processor or a processing circuit, and the interface unit 1120 may further be a transceiver unit or an input/output interface. The communication apparatus 1100 may be configured to implement the steps performed by the first communication apparatus or the second communication apparatus in the foregoing embodiments.

When the communication apparatus 1100 is configured to implement the steps performed by the first communication apparatus in the foregoing embodiment:

The processing unit 1110 is configured to separately perform security processing on q first message groups based on a first random seed, to obtain q second message groups, where q is an integer greater than 1;

the interface unit 1120 is configured to send a second message to the second communication apparatus, where the second message includes the q second message groups; and
the processing unit 1110 is further configured to: after the interface unit 1120 receives feedback information from the second communication apparatus, update the first random seed to a second random seed, where the feedback information indicates that the second communication apparatus correctly receives the second message, and the second random seed is determined based on the second message.

For another implementation, refer to related descriptions of the first communication apparatus or the second communication apparatus in the foregoing embodiments. Details are not described herein again.

As shown in FIG. 12, this application further provides a communication apparatus 1200, which includes a processor 1210, and may further include a communication interface 1220. The processor 1210 and the communication interface 1220 are coupled to each other. It may be understood that, the communication interface 1220 may be a transceiver, an input/output interface, an input interface, an output interface, an interface circuit, or the like. Optionally, the communication apparatus 1200 may further include a memory 1230, configured to: store instructions executed by the processor 1210, store input data required by the processor 1210 to run the instructions, or store data generated after the processor 1210 runs the instructions. The memory 1230 may be a physically independent unit, or may be coupled to the processor 1210, or the processor 1210 includes the memory 1230.

When the communication apparatus 1200 is configured to implement the steps performed by the first communication apparatus and the second communication apparatus in the foregoing embodiments, the processor 1210 may be configured to implement a function of the foregoing processing unit 1110, and the communication interface 1220 may be configured to implement a function of the foregoing interface unit 1120.

It should be noted that the processor in embodiments of this application may be a central processing unit (central processing unit, CPU), or may be another general-purpose processor, a digital signal processor (digital signal processor, DSP), an application-specific integrated circuit (application specific integrated circuit, ASIC), a logic circuit, a field programmable gate array (field programmable gate array, FPGA), or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or transmitted from one computer-readable storage medium to another computer-readable storage medium. For example, the computer programs or the instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In addition, it should be understood that the term "for example" in embodiments of this application represents giving an example, an illustration, or a description. Any embodiment or design scheme described as an "example" in this application should not be explained as being more preferred or having more advantages than another embodiment or design scheme. Exactly, the word "example" is used to present a concept in a specific manner.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A secure communication method, comprising:

   separately performing security processing on q first message groups based on a first random seed, to obtain q second message groups, wherein q is an integer greater than 1;
   sending a second message to a second communication apparatus, wherein the second message comprises the q second message groups; and
   after receiving feedback information from the second communication apparatus, updating the first random seed to a second random seed, wherein the feedback information indicates that the second communication apparatus correctly receives the second message, and the second random seed is determined based on the second message.

**2.** The method according to claim 1, wherein the sending the second message to the second communication apparatus comprises:
sending a first frame to the second communication apparatus, wherein the first frame comprises N subframes, the N subframes correspond to N random seeds, the N subframes comprise a first subframe that carries the second message, N is an integer greater than or equal to 2, and the N random seeds comprise the first random seed.

**3.** The method according to claim 1 or 2, wherein the second random seed is determined based on the first random seed and the second message.

**4.** The method according to claim 2, wherein the second random seed is determined based on a third random seed and the second message, the third random seed is a random seed corresponding to a second subframe, and the second subframe is a subframe of the first frame other than the first subframe.

**5.** The method according to claim 2, wherein the sending the first frame to the second communication apparatus comprises:

sending H frames to the second communication apparatus, wherein the H frames comprise the first frame, and H is an integer greater than or equal to 2, wherein
the second random seed is determined based on a fourth random seed and the second message, the fourth random seed is a random seed corresponding to a third subframe, the third subframe is a subframe of a second frame, and the second frame is a frame among the H frames other than the first frame.

**6.** The method according to any one of claims 1 to 5, wherein the method further comprises:
sending first indication information to the second communication apparatus, wherein the first indication information indicates whether the first random seed is updated relative to a previous round of transmission.

**7.** The method according to claim 2, wherein the first frame further comprises second indication information, and the second indication information indicates whether the N random seeds corresponding to the N subframes are updated relative to a previous round of transmission.

**8.** The method according to any one of claims 1 to 7, wherein the method further comprises:

separately performing security processing on p third message groups based on the second random seed, to obtain p fourth message groups, wherein p is an integer greater than 1; and
sending the fourth message and third indication information to the second communication apparatus, wherein the fourth message is determined based on the p fourth message groups, and the third indication information indicates whether the second random seed is updated relative to the first random seed.

**9.** The method according to any one of claims 1 to 8, wherein the separately performing security processing on the q first message groups based on the first random seed, to obtain the q second message groups comprises:
separately encrypting the q first message groups based on the first random seed, to obtain the q second message groups.

**10.** The method according to any one of claims 1 to 8, wherein the separately performing security processing on the q first message groups based on the first random seed, to obtain the q second message groups comprises:

for each first message group of the q first message groups, performing an exclusive OR operation on the first message group and the first random seed, to obtain a first intermediate value S1;
dividing the first intermediate value S1 into a first segment $s^l$ and a second segment $s^r$, wherein lengths of the first segment $s^l$ and the second segment $s^r$ are b/2;
determining a third segment $t^l$ based on the first segment $s^l$ and the second segment $s^r$, and determining a fourth segment $t^r$ based on the second segment $s^r$ and the third segment $t^l$; and
concatenating the third segment $t^l$ and the fourth segment $t^r$, to obtain the second message groups.

**11.** The method according to claim 10, wherein determining the third segment $t^l$ based on the first segment $s^l$ and the second segment $s^r$, and determining the fourth segment $t^r$ based on the second segment $s^r$ and the third segment $t^l$ comprise:
determining the third segment $t^l$ and the fourth segment $t^r$ according to $t^l = s^l \oplus OWF(s^r, b/2)$ and $t^r = s^r \oplus OWF(t^l, b/2)$, wherein $\oplus$ represents the exclusive OR operation, and OWF represents a one-way function.

**12.** The method according to any one of claims 1 to 11, wherein before the separately performing security processing on the q first message groups based on the first random seed, the method further comprises:

dividing a first message into the q first message groups based on a message group length b.

13. A secure communication method, comprising:

> receiving a second message from a first communication apparatus, wherein the second message comprises q second message groups, and q is an integer greater than 1;
> separately performing security inverse processing on the q second message groups based on a first random seed, to obtain q first message groups; and
> after correctly receiving the second message, updating the first random seed to a second random seed, wherein the second random seed is determined based on the second message.

14. The method according to claim 13, wherein the method further comprises:
sending feedback information to the first communication apparatus, wherein the feedback information indicates that the second message is correctly received.

15. The method according to claim 13 or 14, wherein the receiving the second message from the first communication apparatus comprises:
receiving a first frame from the first communication apparatus, wherein the first frame comprises N subframes, the N subframes correspond to N random seeds, the N subframes comprise a first subframe that carries the second message, N is an integer greater than or equal to 2, and the N random seeds comprise the first random seed.

16. The method according to any one of claims 13 to 15, wherein the second random seed is determined based on the first random seed and the second message.

17. The method according to claim 15, wherein the second random seed is determined based on a third random seed and the second message, the third random seed is a random seed corresponding to a second subframe, and the second subframe is a subframe of the first frame other than the first subframe.

18. The method according to claim 15, wherein the receiving the first frame from the first communication apparatus comprises:

> receiving H frames from the first communication apparatus, wherein the H frames comprise the first frame, and H is an integer greater than or equal to 2, wherein
> the second random seed is determined based on a fourth random seed and the second message, the fourth random seed is a random seed corresponding to a third subframe, the third subframe is a subframe of a second frame, and the second frame is a frame among the H frames other than the first frame.

19. The method according to any one of claims 13 to 18, wherein the method further comprises:
receiving first indication information from the first communication apparatus, wherein the first indication information indicates whether the first random seed is updated relative to a previous round of transmission.

20. The method according to claim 15, wherein the first frame further comprises second indication information, and the second indication information indicates whether the N random seeds corresponding to the N subframes are updated relative to a previous round of transmission.

21. The method according to any one of claims 13 to 20, wherein the method further comprises:

> receiving a fourth message and third indication information from the first communication apparatus, wherein the fourth message comprises p fourth message groups, p is an integer greater than 1, and the third indication information indicates whether the second random seed is updated relative to the first random seed; and
> when the third indication information indicates that the second random seed is updated relative to the first random seed, separately performing security inverse processing on the p fourth message groups based on the second random seed, to obtain p third message groups.

22. The method according to any one of claims 13 to 21, wherein separately performing security inverse processing on the q second message groups based on the first random seed, to obtain the q first message groups comprises:
separately decrypting the q second message groups based on the first random seed, to obtain the q first message groups.

23. The method according to any one of claims 13 to 21, wherein separately performing security inverse processing on the q second message groups based on the first random seed, to obtain the q first message groups comprises:

> for each second message group of the q second message groups, dividing the second message group into a fifth segment $c^l$ and a sixth segment $c^r$, wherein lengths of the fifth segment $c^l$ and the sixth segment $c^r$ are b/2;

determining an eighth segment $u^r$ based on the fifth segment $c^l$ and the sixth segment $c^r$, and determining a seventh segment $u^l$ based on the fifth segment $c^l$ and the eighth segment $u^r$; concatenating the seventh segment $u^l$ and the eighth segment $u^r$, to obtain a second intermediate value S2; and performing an exclusive OR operation on the second intermediate value S2 and the first random seed, to obtain the first message groups.

24. The method according to claim 23, wherein determining the eighth segment $u^r$ based on the fifth segment $c^l$ and the sixth segment $c^r$, and determining the seventh segment $u^l$ based on the fifth segment $c^l$ and the eighth segment $u^r$ comprise:

determining the seventh segment $u^l$ and the eighth segment $u^r$ according to $u^r = c^r \oplus \text{OWF}(c^l,b/2)$ and $u^l = c^l \oplus \text{OWF}(u^r,b/2)$, wherein $\oplus$ represents the exclusive OR operation, and OWF represents a one-way function.

25. The method according to any one of claims 13 to 24, wherein before separately performing security inverse processing on the q second message groups based on the first random seed, the method further comprises:

dividing the second message into the q second message groups based on a message group length b.

26. A communication apparatus, comprising a module or a unit configured to perform the method according to any one of claims 1 to 25.

27. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 25 by using a logic circuit or by executing instructions.

28. A computer program product, comprising a computer program or instructions, wherein when the computer program or the instructions are executed by a processor, the method according to any one of claims 1 to 25 is implemented.

29. A chip system, wherein the chip system comprises a processor, the processor is configured to be coupled to a memory, the memory is configured to store a computer program or instructions, and when the computer program or the instructions are executed by the processor, the method according to any one of claims 1 to 25 is implemented.

30. A computer-readable storage medium, wherein the storage medium stores a computer program or instructions, and when the computer program or the instructions are executed by a processor, the method according to any one of claims 1 to 25 is implemented.

FIG. 1

FIG. 2

First communication
apparatus

Second communication
apparatus

S301: Separately perform security
processing on q first message groups
based on a first random seed, to obtain q
second message groups

S302: A second message includes the q
second message groups

S303: Separately perform security inverse
processing on the q second message
groups based on the first random seed, to
obtain the q first message groups

S304: Feedback information, indicating
correct receiving

S305: After receiving the feedback
information from the second
communication apparatus, update the first
random seed to a second random seed

S306: After correctly receiving the second
message, update the first random seed to
the second random seed

FIG. 3

FIG. 4

FIG. 5

FIG. 6

FIG. 7

| Group 1 | Group 2 | ... | Group q |
|---|---|---|---|

| HDR | Subframe |
|---|---|

| Subframe 1 | Subframe 2 | ... | Subframe N |
|---|---|---|---|

| HDR | Frame | CRC |
|---|---|---|

FIG. 8

| Group 1 | Group 2 | ... | Group q |
|---|---|---|---|

| HDR | Subframe |
|---|---|

| Subframe 1 | Subframe 2 | ... | Subframe N |
|---|---|---|---|

| HDR | Frame | CRC |
|---|---|---|

| Frame 1 | Frame 2 | ... | Frame h–1 | Frame h | ... | Frame H |
|---|---|---|---|---|---|---|

FIG. 9

Location 1                                              Location 2

| HDR | Frame | CRC | PAD |
|-----|-------|-----|-----|

| Frame 1 | Frame 2 | ... | Frame h–1 | Frame h | ... | Frame H |
|---------|---------|-----|-----------|---------|-----|---------|

FIG. 10

Communication apparatus
1100

Processing unit 1110

Interface unit 1120

FIG. 11

Memory

1230

1210

1220

Processor

1230

Memory

Communication
interface

1200

Memory

1230

FIG. 12

## INTERNATIONAL SEARCH REPORT

| International application No. |
|---|
| **PCT/CN2023/124373** |

### A. CLASSIFICATION OF SUBJECT MATTER

H04L9/32(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

3GPP, CNTXT, ENTXTC: 安全, 安全处理, 报文, 反馈, 分段, 分组, 个, 更新, 加密, 随机, 随机种子, 完整性, 响应, 消息, 新, 异或, 应答, 正确接收, 种子, OWF, random, XOR, response, ACK, message, correct, packet, update, new, security, seed, encryption

### C. DOCUMENTS CONSIDERED TO BE RELEVANT

| Category* | Citation of document, with indication, where appropriate, of the relevant passages | Relevant to claim No. |
|---|---|---|
| A | US 2022021521 A1 (GK8 LTD.) 20 January 2022 (2022-01-20)<br>claims 1-5 | 1-30 |
| A | CN 107196760 A (XU ZHINENG) 22 September 2017 (2017-09-22)<br>entire document | 1-30 |
| A | US 2002094085 A1 (MICROSOFT CORP.) 18 July 2002 (2002-07-18)<br>entire document | 1-30 |
| A | US 2019387401 A1 (INTEL CORP.) 19 December 2019 (2019-12-19)<br>entire document | 1-30 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 June 2024** | **04 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124373**

| Patent document cited in search report | | | Publication date (day/month/year) | Patent family member(s) | | | Publication date (day/month/year) |
|---|---|---|---|---|---|---|---|
| US | 2022021521 | A1 | 20 January 2022 | SG | 11202105973 | QA | 29 July 2021 |
| | | | | EP | 3891617 | A1 | 13 October 2021 |
| | | | | WO | 2020115748 | A1 | 11 June 2020 |
| | | | | IL | 283739 | A | 29 July 2021 |
| CN | 107196760 | A | 22 September 2017 | JP | 2020517209 | A | 11 June 2020 |
| | | | | CA | 3060337 | A1 | 25 October 2018 |
| | | | | WO | 2018192399 | A1 | 25 October 2018 |
| | | | | US | 2020195430 | A1 | 18 June 2020 |
| | | | | KR | 20200015484 | A | 12 February 2020 |
| | | | | EP | 3614620 | A1 | 26 February 2020 |
| US | 2002094085 | A1 | 18 July 2002 | DE | 60206809 | D1 | 01 December 2005 |
| | | | | EP | 1223705 | A2 | 17 July 2002 |
| | | | | ATE | 308176 | T1 | 15 November 2005 |
| | | | | US | 2006005040 | A1 | 05 January 2006 |
| US | 2019387401 | A1 | 19 December 2019 | EP | 3613231 | A1 | 26 February 2020 |
| | | | | WO | 2018194971 | A1 | 25 October 2018 |
| | | | | CN | 110476448 | A | 19 November 2019 |

Form PCT/ISA/210 (patent family annex) (July 2022)